# FASCICULE DE BREVET EUROPEEN

(11) **EP 1 350 640 B1**
(45) Date de publication et mention de la délivrance du brevet: **13.02.2008**
(21) Numéro de dépôt: 03006543.7
(22) Date de dépôt: 24.03.2003
(51) Int. Cl.: B60C 23/04

(54) **Pneumatique doté d'une antenne réceptrice**
Reifen mit einer Empfangsantenne
Tyre with a receiving antenna

(30) Priorité: 02.04.2002 FR 0204064
(43) Date de publication de la demande: 08.10.2003
(73) Titulaire: Société de Technologie Michelin, 63000 Clermont-Ferrand (FR); Michelin Recherche et Technique S.A., 1763 Granges-Paccot (CH)
(72) Inventeur: Poulbot, Valéry, 63430 Les Martres d'Artiere (FR); Robinet, Antoine, 38100 Grenoble (FR); Thomas, Thierry, 38760 Varces-Allieres et Risset (FR)
(74) Mandataire: Bauvir, Jacques

(56) Documents cités:
- WO-A-99/29522
- WO-A-99/29525
- FR-A- 2 771 965

## Description

### DOMAINE TECHNIQUE

La présente invention est relative à un pneumatique doté d'au moins une antenne réceptrice d'un dispositif de réception incluant au moins un objet télécontrôlé depuis un dispositif émissif externe au pneumatique. Le dispositif de réception et le dispositif émissif communiquent sans contact via l'antenne de réception, ce qui est particulièrement intéressant puisqu'ils sont animés d'un mouvement relatif l'un par rapport à l'autre.

### ETAT DE LA TECHNIQUE ANTERIEURE

Le dispositif émissif est destiné à transmettre de l'énergie et/ou des informations vers l'objet qui peut être un capteur, un compteur ou un dispositif réalisant une autre fonction. Le capteur peut être notamment un capteur de force, un capteur de température, un capteur de pression. L'objet est destiné, le cas échéant, à communiquer des données par exemple des signaux relatifs aux mesures, au comptage ou autres, au dispositif émissif.

L'objet est donc relié à au moins une première antenne inductive dite réceptrice qui doit se coupler électromagnétiquement avec au moins une seconde antenne inductive dite émissive du dispositif émissif. Ce dispositif émissif va alimenter en énergie l'objet et/ou piloter son fonctionnement et le cas échéant récupérer les données qu'il lui fournit. Les deux antennes sont formées d'un conducteur en boucle agencée en une ou plusieurs spires. Les deux antennes vont communiquer aux abords d'une fréquence de travail v. Le principe est de générer depuis le dispositif émissif un champ électromagnétique à la fréquence de travail ν par l'intermédiaire duquel de l'énergie et/ou des informations vont être transmises.

L'énergie est transmise par la porteuse, elle est fonction de l'amplitude de cette dernière.

Le dispositif émissif comporte, en plus de l'antenne émissive, des moyens électroniques pour générer la fréquence de travail ν et un étage de modulation afin de pouvoir transmettre sous forme électromagnétique les informations aux abords de la fréquence de travail vers l'objet. Les informations sont transmises par la modulation de cette même porteuse, elle peut être d'amplitude, de fréquence, de phase.

Le dispositif émissif peut comporter également des moyens pour traiter les données reçues de l'objet.

Le dispositif de réception comporte lui, coopérant avec l'objet, un circuit électronique, ce circuit pouvant être un circuit redresseur.

La demande de brevet FR-A1-2 771 965 décrit un pneumatique doté d'une antenne réceptrice reliée à un capteur. L'antenne et le capteur sont implantés dans le pneumatique. L'antenne est destinée à se coupler électromagnétiquement avec une autre antenne située à l'extérieur du pneumatique. L'antenne réceptrice de forme rectangulaire lorsqu'elle est mise à plat, s'étend le long de la périphérie du pneumatique sous sa bande de roulement entre une couche d'étanchéité (dite aussi gomme intérieure), située du côté de la face interne du pneumatique, et l'armature de carcasse radiale.

La fréquence de travail ν est un paramètre important car elle conditionne les caractéristiques de l'antenne réceptrice du dispositif récepteur et celles de l'antenne émissive du dispositif émissif. L'antenne réceptrice possède une fréquence d'auto résonance qui est fonction de ses caractéristiques intrinsèques, c'est à dire de la résistance de son conducteur, de la longueur de son conducteur, de la valeur de la capacité intrinsèque répartie le long de son conducteur, de sa surface et de caractéristiques externes liées à son environnement telles que la grandeur des capacités parasites, la propension du milieu à canaliser les lignes de champ magnétique.

Pour fonctionner de manière optimale l'antenne réceptrice du dispositif récepteur doit être accordée sur la fréquence de travail v. L'accord se fait d'habitude à l'aide d'un condensateur d'accord monté en parallèle avec l'antenne. A l'accord, la relation suivante est vérifiée :

LC(2πν)² = 1 avec L inductance de l'antenne réceptrice, C capacité globale de l'antenne réceptrice Ces grandeurs L et C sont les grandeurs équivalentes à la fréquence de travail vues par le dispositif de réception. Par exemple, C sera la somme de toutes les capacités mises en jeu au niveau de l'antenne réceptrice : capacité intrinsèque de l'antenne, capacité parasite et capacité du condensateur d'accord.

Parmi des fréquences de travail autorisées par les normes AFNOR et qui correspondent aux bandes ISM on choisit une fréquence de travail de l'ordre de la dizaine de mégahertz, avec une fréquence plus élevée il serait difficile de transmettre de l'énergie et avec une fréquence plus basse, le débit d'informations serait trop faible. Compte tenu de cette fréquence de travail, des faibles niveaux de puissance mis en jeu lors de la transmission avec le dispositif émissif, du bruit ambiant et de l'encombrement réduit imposé au dispositif émissif qui se trouve sur le véhicule sur lequel est monté le pneumatique, la surface de l'antenne réceptrice du dispositif récepteur est grande devant celle de l'antenne émissive du dispositif émissif.

Cela se traduit par une fréquence d'auto résonance qui est inférieure à la fréquence de travail ν, par une forte inductance et par une forte capacité intrinsèque répartie le long du conducteur et vue par l'objet. Dans le pneumatique, il peut exister d'importantes capacités parasites au voisinage de l'antenne. Elles sont dues aux élastomères chargés au noir de carbone ou à la silice qui sont les constituants principaux du pneumatique, et à la structure du pneumatique comprenant des armatures métalliques sur un sommet, et dans certains cas une armature de carcasse également métallique.

Une forme d'antenne longue et étroite conduit également à une réduction de la fréquence d'auto résonance.

Si la fréquence d'auto résonance de l'antenne réceptrice est trop basse vis à vis de la fréquence de travail ν, on ne peut pas accorder l'antenne réceptrice du dispositif récepteur sur la fréquence de travail ν car la valeur de sa capacité intrinsèque est déjà trop importante pour obtenir l'accord. L'ajout d'un condensateur d'accord viendrait encore aggraver la situation. Si l'accord n'est pas obtenu, le couplage entre l'antenne réceptrice et l'antenne émissive ne peut être optimum et le rendement de la transmission n'est pas bon. Il n'est pas envisageable non plus de réduire la surface de l'antenne réceptrice pour essayer d'obtenir l'accord, cela détériorerait la qualité du couplage.

L'antenne réceptrice décrite dans le brevet FR-A1-2 771 965 risque, à cause de sa localisation, de ne pas se coupler correctement à l'antenne émissive extérieure au pneumatique. En effet, par rapport à l'extérieur du pneumatique, elle se trouve sous l'armature de carcasse qui est conductrice de l'électricité et qui va avoir alors un rôle de cage de Faraday.

### EXPOSÉ DE L'INVENTION

La présente invention vise à pallier les inconvénients mentionnés ci-dessus, et notamment vise à améliorer l'accord entre une antenne réceptrice dont est doté un pneumatique et une antenne émissive située à l'extérieur du pneumatique, par exemple sur un véhicule équipé du pneumatique, sans à avoir à réduire la surface de l'antenne réceptrice reliée à l'objet ou à abaisser la fréquence de travail.

Plus précisément la présente invention propose un pneumatique équipé d'au moins une antenne réceptrice d'un dispositif de réception qui inclut un objet destiné à être télécontrôlé par couplage électromagnétique avec au moins une antenne émissive. Cette antenne réceptrice est destinée à être reliée à l'objet et est morcelée en plusieurs parties en boucle agencées en un montage parallèle, ces parties en boucle ayant chacune une surface, ces surfaces étant globalement juxtaposées de manière à ce que les parties en boucle se couplent successivement et continûment à l'antenne émissive.

Dans le contexte de la présente invention, on désigne par « pneumatique » non seulement le bandage gonflé sous une certaine pression nominale pour son fonctionnement normal, mais également un bandage élastique non pneumatique. Par « pneumatique », on désigne donc de façon générale tout produit équipé d'une bande de roulement qui roule sur la chaussée.

L'antenne réceptrice possède une surface utile de réception avec l'antenne émissive et la somme des surfaces de toutes les parties en boucle est sensiblement égale à la surface utile de l'antenne réceptrice. Avec une telle structure, la surface de l'antenne réceptrice peut être avantageusement beaucoup plus grande que celle de l'antenne émissive.

Pour assurer un bon couplage avec l'antenne émissive, il est préférable que, les parties en boucle étant formées d'un conducteur, une portion de conducteur d'une première partie en boucle et une portion de conducteur d'une seconde partie en boucle, voisine de la première partie en boucle, soient séparées par un espace aussi faible que possible.

De la même manière, il est préférable que les parties en boucle soient séparées, du côté de l'objet, par un espace aussi faible que possible.

Pour faciliter l'accord entre l'antenne émissive et l'antenne réceptrice, un condensateur d'accord peut être monté en parallèle avec au moins une des parties en boucle. L'antenne est avantageusement blindée pour diminuer son rayonnement électrique notamment à proximité de l'objet et/ou du circuit électronique.

L'antenne réceptrice peut être immobilisée entre deux feuilles d'un matériau électriquement isolant pour former un complexe qui est implanté dans le pneumatique.

Le pneumatique peut comporter dans une zone de sommet, au moins une armature de sommet entourée par une bande de roulement, le complexe étant inséré entre la armature de sommet et la bande de roulement.

Il est préférable de réaliser les feuilles du complexe dans un matériau ayant des propriétés mécaniques proches de celles de la bande de roulement pour que l'insértion de l'antenne réceptrice perturbe au minimum le comportement du pneumatique.

Dans un autre mode de réalisation, le pneumatique comportant une armature de carcasse recouverte vers l'extérieur d'un flanc extérieur, le complexe peut être inséré entre l'armature de carcasse et le flanc extérieur.

Les feuilles du complexe peuvent être réalisées dans un élastomère chargé en silice et en noir de carbone, ce matériau étant peu chargé en noir de carbone de manière à le laisser électriquement isolant.

Il est avantageux, notamment au point de vue coût et adhésion à la gomme, de réaliser les parties en boucle avec un conducteur métallique nu. Ce conducteur peut comporter un ou plusieurs fils.

On peut réaliser le conducteur avec un ou plusieurs fils qui sont de même nature que les fils de renforcement employés conventionnellement dans le pneumatique. Il peut s'agir de fils d'acier laitonné en surface, ou de tout autre fil ou câble traité ou revêtu de façon appropriée pour coller directement au caoutchouc.

Il est préférable que le conducteur soit ondulé avec un pas d'ondulation adapté aux déformations existant à l'endroit choisi pour l'implantation de l'antenne, de manière à ne pas perturber la mécanique du pneumatique pendant le roulage.

Le conducteur peut être collé à au moins une des feuilles du complexe pour garantir une bonne tenue dans le temps du complexe.

Le pneumatique peut être équipé de l'objet. Ce dernier peut coopérer avec un circuit électronique dont est également équipé le pneumatique.

Le circuit électronique peut comporter un circuit redresseur unique, les parties en boucle ayant au moins une extrémité reliée en entrée du circuit redresseur, l'objet étant relié en sortie du circuit redresseur.

Dans une variante, le circuit électronique peut comporter plusieurs circuits redresseurs, chaque partie en boucle ayant au moins une extrémité reliée en entrée d'un des circuits redresseurs, les circuits redresseurs ayant leurs sorties reliées en série avec l'objet.

L'objet et/ou le circuit électronique peut/peuvent être localisé(s) dans une zone de sommet du pneumatique.

Dans un autre mode de réalisation, l'objet et/ou le circuit électronique peut/peuvent être localisé(s) dans un flanc du pneumatique.

Dans encore un autre mode de réalisation, l'objet et/ou le circuit électronique peut/peuvent être localisé(s) dans un volume interne délimité par le pneumatique.

L'objet et/ou le circuit électronique peut/peuvent être localisé(s) dans le complexe.

L'objet peut être un capteur, un compteur ou encore une étiquette électronique.

L'objet et/ou le circuit électronique peuvent être avantageusement blindés en champ électrique.

La présente invention concerne également un procédé de réalisation d'un pneumatique comportant les étapes suivantes :
- préparation d'une carcasse,
- préparation d'un complexe comportant une antenne réceptrice morcelée en plusieurs parties en boucle agencées en un montage parallèle, cette antenne réceptrice étant immobilisée entre deux feuilles d'un matériau électriquement isolant, préférentiellement en matériau élastomère non vulcanisé, compatible avec les matériaux habituels du pneumatique, en prévoyant une liaison avec au moins un objet destiné à être télécontrôlé par couplage électromagnétique entre l'antenne réceptrice et au moins une antenne émissive,
- pose du complexe sur la carcasse,
- recouvrement du complexe par un élastomère chargé et finition de manière à obtenir un pneumatique cru,
- moulage et vulcanisation du pneumatique cru.

L'élastomère chargé forme une bande de roulement du pneumatique ou bien contribue à former un flanc du pneumatique suivant que l'antenne se trouve dans le flanc ou dans le sommet.

Le procédé peut comporter une étape de pose d'au moins une armature de sommet sur la carcasse avant la pose du complexe.

Il peut aussi comporter une étape de forage dans la carcasse d'un trou débouchant dans un volume interne délimité par le pneumatique, ce trou étant destiné à contenir des conducteurs de connexion pour la liaison entre l'antenne réceptrice et l'objet, l'objet se trouvant dans le volume interne. Cette étape est suivie d'une étape de rebouchage avant cuisson, par l'intérieur du pneumatique, du trou foré contenant les conducteurs.

L'étape de préparation du complexe peut inclure la réalisation d'au moins une extension dans laquelle sont immobilisés des conducteurs de connexion pour la liaison entre l'antenne réceptrice et l'objet, cette extension étant rabattue sur un flanc du pneumatique lorsque le complexe est posé sur une zone de sommet du pneumatique ou sur la zone de sommet lorsque le complexe est posé sur le flanc.

### BRÈVE DESCRIPTION DES DESSINS

La présente invention sera mieux comprise à la lecture de la description d'exemples de réalisation donnés, à titre purement indicatif et nullement limitatif, en faisant référencé aux dessins annexés sur lesquels :
les figures 1A, 1B, 1C montrent un exemple d'antenne réceptrice implantée dans la zone de sommet d'un pneumatique selon l'invention, l'objet auquel elle est reliée étant situé dans la partie non usante de la bande de roulement ;
les figures 2A, 2B montrent un exemple d'antenne réceptrice implantée dans la zone de sommet d'un pneumatique selon l'invention, l'objet auquel elle est reliée étant situé dans le volume intérieur délimité par le pneumatique ;
les figures 3A, 3B, 3C montrent deux exemples d'antenne réceptrice implantée dans la zone de sommet d'un pneumatique selon l'invention, cette dernière étant reliée à un objet par une liaison qui court dans le flanc du pneumatique ;
les figures 4A, 4B, 4C, 4D, 4E montrent un exemple d'antenne réceptrice implantée dans le flanc d'un pneumatique selon l'invention, l'objet auquel elle est reliée étant soit dans le flanc du pneumatique, soit dans la zone de sommet ;
la figure 5 montre encore un exemple d'antenne réceptrice implantée dans le flanc d'un pneumatique selon l'invention, l'objet auquel elle est reliée étant dans le volume plein d'air délimité par le pneumatique ;
les figures 6A, 6B montrent un exemple d'antenne réceptrice implantée dans un pneumatique selon l'invention, cette antenne étant reliée à l'objet par l'intermédiaire d'un circuit électronique non solidaire de l'objet ;
les figures 7A, 7B, 7C, 7D montrent plusieurs variantes de connexion entre l'antenne réceptrice et l'objet à télécontrôler ;
la figure 8 montre les parties en boucle de l'antenne réceptrice et des condensateurs d'accord reliés à ces parties en boucle ;
les figures 9A, 9B montre un exemple d'antenne réceptrice de l'art antérieur dans deux positions différentes.

Sur ces figures, les éléments identiques sont désignés par les mêmes caractères de référence et les échelles ne sont pas respectées.

### EXPOSÉ DÉTAILLÉ DE MODES DE RÉALISATION PARTICULIERS

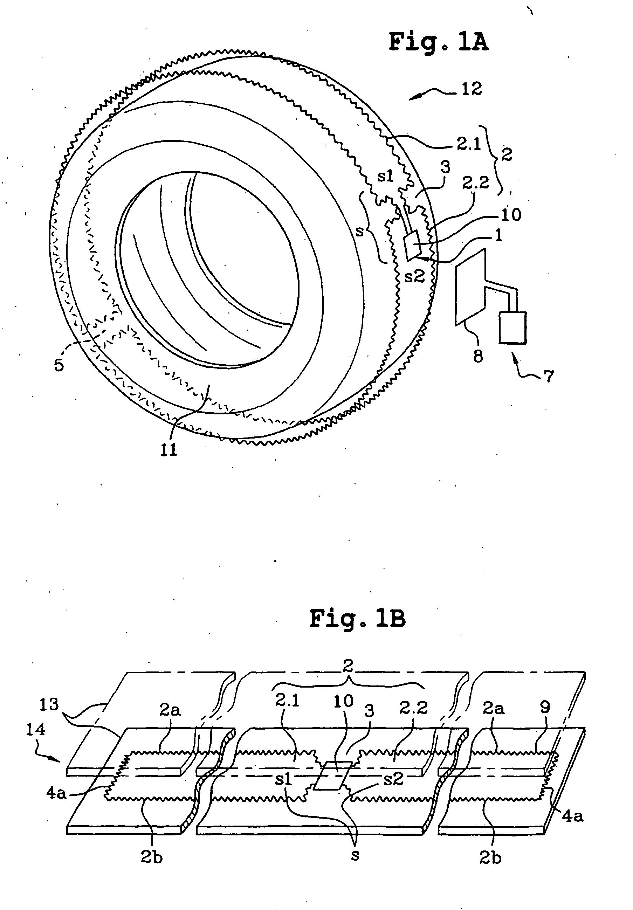

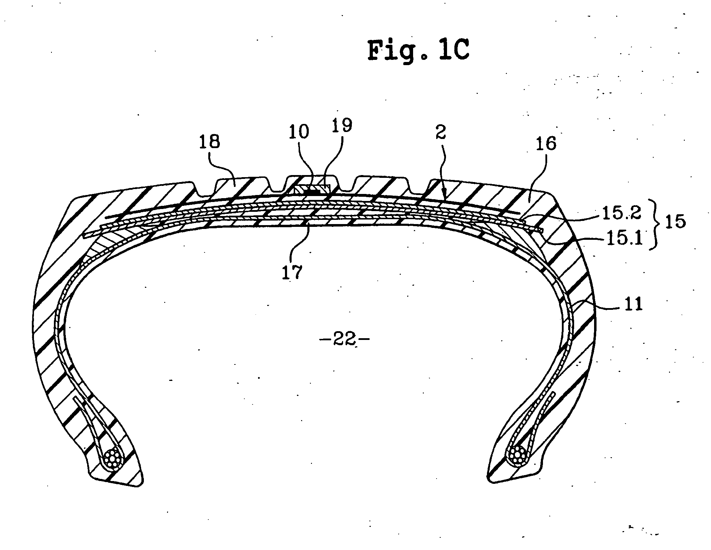

On va se référer maintenant à la figure 1A en liaison avec les figures 1B, 1C. On distingue une forme schématique d'un pneumatique 12 équipé d'un dispositif de réception 1 comportant au moins un objet 10, par exemple un capteur de force, destiné à être télécontrôlé depuis un dispositif émissif 7 extérieur au pneumatique 12.

Le télécontrôle signifie soit une alimentation en énergie à distance de l'objet, soit une communication à distance entre l'objet et le dispositif émissif, soit les deux fonctions.

L'objet 10 est relié à au moins une antenne inductive réceptrice 2 destinée à se coupler de manière électromagnétique à au moins une autre antenne inductive émissive 8 du dispositif émissif 7. L'objet 10 pourrait comporter un capteur autre qu'un capteur de force, il pourrait s'agir d'un capteur de température, d'un capteur de pression, etc. Il est envisageable que l'objet comporte au lieu d'un capteur un compteur, une étiquette électronique pour identifier le pneumatique, un dispositif de contrôle par exemple ou une combinaison de plusieurs éléments précédemment cités.

L'antenne réceptrice 2 reliée à l'objet 10 est située en sommet du pneumatique 12 sous la bande de roulement 16 comme l'illustre la coupe de la figure 1C. L'antenne réceptrice 2 est mobile au rythme du pneumatique. L'antenne réceptrice 2 est formée de plusieurs parties en boucle 2.1, 2.2. Les différentes parties en boucle 2.1, 2.2 sont agencées en un montage parallèle. Sur toutes les figures, les parties en boucle comportent un conducteur 9 agencé en une seule spire, il est bien entendu qu'elles pourraient en avoir plusieurs.

Chacune des parties en boucle 2.1, 2.2 possède une surface qui correspond à la surface d'une spire et ces surfaces référencées s1, s2 sont globalement juxtaposées. Cela signifie que grosso modo elles sont côte à côte et non pas en vis à vis.

Les parties en boucle 2.1, 2.2 se couplent alors successivement et continûment à l'antenne émissive 8.

L'antenne réceptrice 2 possède une surface utile de réception s avec l'antenne émissive 8 du dispositif émissif 7 sensiblement égale à la somme des surfaces s1, s2 des différentes parties en boucle 2.1, 2.2. Par surface utile, on entend la surface maximale qui sert effectivement pour la transmission et pour laquelle les pertes en ligne sont acceptables.

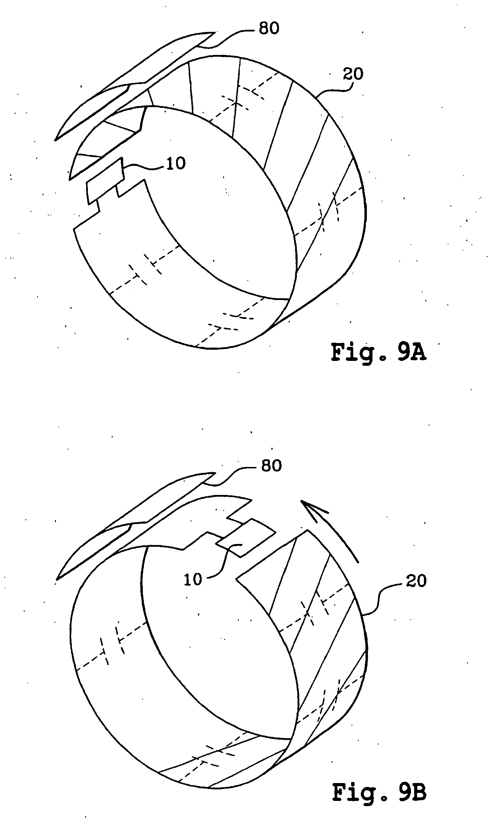

Lorsque l'antenne réceptrice n'est pas morcelée comme dans l'art antérieur, sa surface n'est pas totalement utile. On peut se référer aux figures 9A, 9B. On y distingue une antenne réceptrice 20 conventionnelle pour pneumatique et une antenne émissive 80 rectangulaire. L'antenne réceptrice 20, de grande taille, est sensiblement rectangulaire, lorsqu'elle est déroulée à plat. Ces antennes doivent se coupler l'une avec l'autre lors de la rotation du pneumatique. L'antenne réceptrice 20 est reliée à un objet 10. Lorsque les deux antennes 20, 80 sont couplées, un courant électrique circule dans l'antenne réceptrice 20. Mais lorsque l'antenne émissive 80 est loin de la connexion entre l'antenne réceptrice 20 et l'objet 10 (figure 9A), à cause des pertes en ligne inévitables dues notamment à des capacités parasites, pratiquement aucun signal n'arrive à l'objet, le couplage n'est pas satisfaisant. Par contre, lorsque l'antenne émissive 80 se trouve près de la connexion entre l'antenne réceptrice 20 et l'objet 10 (figure 9B), le signal arrive correctement à l'objet 10 pratiquement sans pertes. L'antenne réceptrice 20 possède une zone inutile qui est matérialisée par des hachures, sa surface utile est plus petite que sa surface réelle. Dans l'invention en morcelant l'antenne réceptrice, on supprime cette zone inutile.

On se réfère de nouveau à la figure 1A. Le dispositif émissif 7 est extérieur au pneumatique 12, il est situé par exemple sur le véhicule sur lequel est monté le pneumatique 12. Le dispositif émissif 7 peut inclure la batterie du véhicule pour l'alimentation en énergie et être doté d'une antenne émissive 8. L'antenne émissive 8 peut être située dans l'aile du véhiculé pour être en vis à vis de l'antenne réceptrice 2.

La figure 1B montre de manière partielle l'antenne réceptrice 2, d'un pneumatique selon l'invention, déroulée à plat. Elle comporte deux parties en boucle 2.1, 2.2. Chacune de ces parties en boucle 2.1, 2.2 possède deux grandes portions 2a, 2b sensiblement parallèles, elles suivent la périphérie du sommet du pneumatique 12. Ces grandes portions 2a, 2b sont disposées de manière que leur espacement relatif perturbe le moins possible la mécanique de roulage du pneumatique une fois celui-ci finalisé et vulcanisé. Les deux grandes portions 2a, 2b d'une même partie en boucle sont réunies, à une extrémité, par une petite portion 4a qui est représentée dirigée sensiblement selon la largeur du pneumatique. L'angle formé entre la petite portion 4a et les grandes portions 2a, 2b est sensiblement un angle droit. Il est bien entendu que cet angle pourrait être parfaitement quelconque et que la petite portion pourrait avoir une orientation autre que selon la largeur du pneumatique.

A l'autre extrémité, les grandes portions 2a, 2b des parties en boucle 2.1, 2.2 se rapprochent pour former le montage parallèle. Les parties en boucle 2.1, 2.2 ainsi agencées sont reliées à l'objet 10.

Un espace 3 aussi faible que possible sépare, du côté de l'objet 10, les deux parties en boucle 2.1, 2.2. Cet espace 3 est de préférence inférieur à environ 1 centimètre.

Les longueurs des grandes portions 2a, 2b des parties en boucle 2.1, 2.2 sont choisies pour que, lors du positionnement de l'antenne réceptrice 2 autour de la zone de sommet de la carcasse 11, les petites portions 4a de chacune des parties en boucle soient proches l'une de l'autre tout en étant sans contact l'une avec l'autre. Un espace 5 inférieur à environ un centimètre les séparent. Dans l'exemple décrit avec deux parties en boucle 2.1, 2.2 sensiblement identiques, la petite portion 4a des parties en boucle vaut environ de 10 à 10,5 centimètres soit un peu moins que la largeur du pneumatique, tandis que leurs grandes portions 2a, 2b valent environ 1 mètre soit environ la moitié de la longueur de la bande de roulement.

Pendant le roulage du pneumatique, un couplage inductif total et permanent peut s'établir entre l'antenne réceptrice 2 et l'antenne émissive 8, c'est à dire entre les parties en boucle 2.1, 2.2 et l'antenne émissive 8. La surface s de l'antenne réceptrice 2 est sensiblement une surface latérale d'un cylindre de révolution, elle correspond sensiblement à la surface de la bande de roulement du pneumatique.

Les différentes parties en boucle 2.1, 2.2 ont été représentées identiques mais ce n'est pas une obligation, elles pourraient avoir des formes et/ou des tailles différentes.

En morcelant l'antenne réceptrice 2 en plusieurs parties en boucle 2.1, 2.2, agencées dans un montage parallèle et en juxtaposant leurs surfaces on ne modifie pratiquement pas sa surface et on augmente sa surface utile par rapport à celle d'une antenne classique unique (telle que celle montrée dans la demande de brevet FR-A1-2 771 965 qui occupait sensiblement toute la surface de la bande de roulement), par contre, on réduit la capacité intrinsèque de l'antenne réceptrice 2 vue par l'objet 10 ainsi que la valeur de son inductance.

Lorsque les différentes parties en boucle 2.1, 2.2 ont la même longueur, la capacité intrinsèque de l'antenne réceptrice 2 vaut sensiblement celle de l'une des parties en boucle, c'est à dire que par rapport à une antenne unique de l'art antérieur comme celle décrite dans la demande de brevet FR-A1-2 771 965, on a divisé sa capacité intrinsèque par le nombre de parties en boucle.

En réduisant la capacité intrinsèque de l'antenne réceptrice 2, par son morcellement, la fréquence d'auto résonance de chacune des parties est nettement plus élevée que celle de l'antenne unique *de* surface équivalente à la surface *de* l'ensemble *des parties.* Il est alors possible de travailler à une fréquence de travail plus élevée qu'avant.

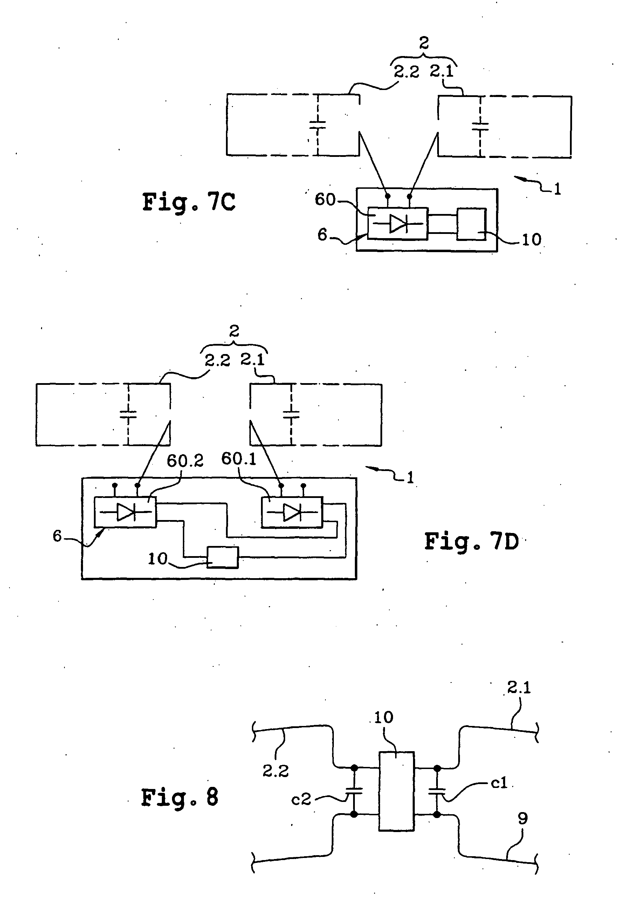

On atteint alors l'accord soit directement par le choix du nombre de parties en boucle et/ou par le choix de la géométrie des parties en boucle, soit grâce à l'association d'au moins un condensateur d'accord monté en parallèle avec l'une des parties en boucle. Aucun condensateur d'accord n'est visible sur les figures 1, mais on peut se reporter à la figure 8 pour en apercevoir un.

A l'inverse, le fait d'utiliser une antenne morcelée peut permettre d'augmenter la surface en utilisant plusieurs parties en boucle dont les surfaces sont du même ordre de grandeur que celle de l'antenne unique conventionnelle.

L'antenne émissive 8 du dispositif émissif 7 a une surface plus petite que celle de l'antenne réceptrice 2. Dans cette application, elle pourrait avoir des dimensions d'environ 10 centimètres par 20 centimètres et la fréquence de travail ν pourrait être sensiblement égale à 13,56 MHz.

L'antenne réceptrice 2 est immobilisée entre deux feuilles 13 en matériau électriquement isolant compatible avec les matériaux habituels du pneumatique tel qu'un élastomère non vulcanisé chargé à la silice et peu au noir de carbone. L'épaisseur des feuilles peut être par exemple comprise entre environ 0,1 et 1 millimètre.

L'association des deux feuilles 13 et de l'antenne réceptrice 2 forme un complexe 14 semi-fini cru. Lors de la fabrication du pneumatique, on enroule sur le sommet de la carcasse 11 (de préférence après conformation s'il s'agit d'un procédé comportant une étape de conformation), dans l'ordre, des armatures de sommet 15, le complexe 14 et enfin une bande de roulement 16. A ce stade le pneumatique est dit cru. Ensuite, de manière conventionnelle, il est moulé et vulcanisé en presse de cuisson au moyen d'un moule.

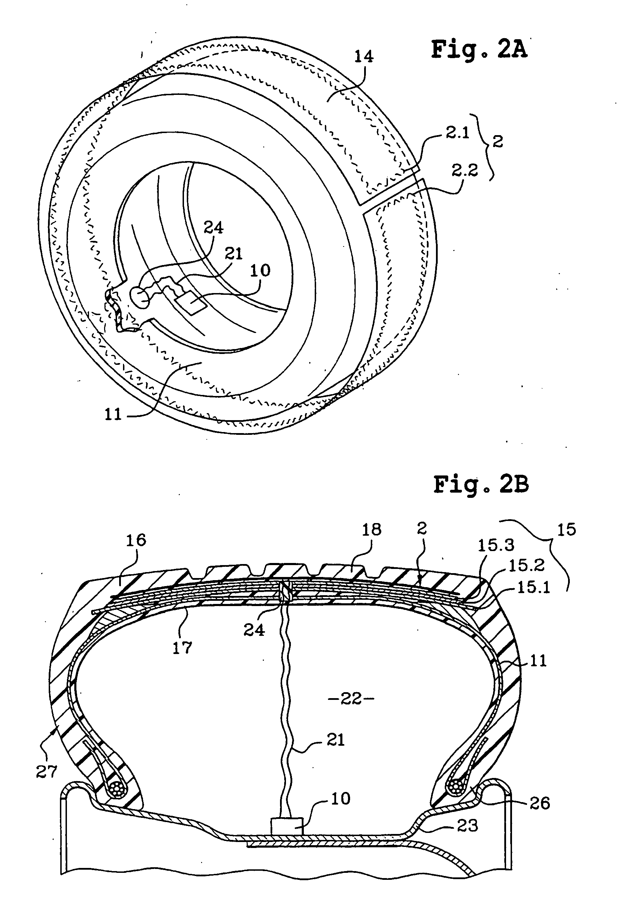

On peut se référer à la figure 1C qui montre une coupe radiale d'un pneumatique selon l'invention. Le pneumatique délimite un volume interne 22 destiné à être plein d'air. Sous la carcasse 11 se trouve une couche interne d'étanchéité 17. Les armatures de sommet 15 qui servent à renforcer le pneumatique peuvent inclure de manière classique deux ou plusieurs nappes croisées superposées 15.1, 15.2 et éventuellement une nappe de frette 15.3. La nappe de frette 15.3 est visible sur la figure 2B. Ces armatures de sommet 15 comportent généralement des fils de renforcement métalliques notamment pour les nappes croisées et/ou des fils de renforcement textiles notamment pour la nappe de frette, ces fils de renforcement étant noyés dans un élastomère chargé.

L'objet 10 auquel est reliée l'antenne réceptrice 2 peut être implanté à l'intérieur du complexe 14 comme sur la figure 1B, mais il est possible qu'il soit localisé à l'extérieur du complexe 14 comme sur la figure 1C. Dans cette dernière configuration, l'une des feuilles 13 du complexe 14 est dotée alors d'une ouverture pour laisser passer des conducteurs 21 de connexion de l'antenne réceptrice 2 à l'objet 10.

Sur la figure 1C, l'objet 10 se trouve dans une zone non usante de la bande de roulement 16 de manière à garantir son fonctionnement pendant toute la durée de vie du pneumatique. La bande de roulement 16 présente une partie destinée à être usée avec des éléments de sculpture 18 et la zone non usante se trouve entre les armatures de sommet 15 et la partie destinée à être usée. Les éléments de sculpture 18 sont supposés être continus dans le sens circonférentiel de la bande de roulement 16. Ils peuvent prendre bien sûr une grande variété de formes et de tailles suivant le type du pneumatique et ses dimensions.

Dans cette structure avec le complexe 14 agissant tel une sous-couche par rapport à la bande de roulement 16, il est avantageux de réaliser les feuilles 13 du complexe 14 dans un matériau ayant des propriétés mécaniques proches de celles du matériau de la bande de roulement 16.

Lors de l'étape de moulage du pneumatique tout en début de la vulcanisation, l'élastomère chargé formant la bande de roulement 16 est susceptible de subir des déplacements de fluide sous l'action conjuguée de la pression et de l'augmentation de température. Pour éviter que l'objet 10, situé hors du complexe 14, ne subisse un déplacement par rapport à sa position initiale dans le pneumatique cru, on peut réaliser, dans la bande de roulement 16, un insert 19 prémoulé et au moins partiellement vulcanisé. L'insert 19 dans lequel est placé l'objet 10 est rempli d'élastomère chargé, de préférence de même composition que celui de la bande de roulement 16.

Notamment lorsque l'objet 10 est un capteur de force destiné à mesurer des efforts ou des contraintes subis par l'élastomère chargé dans lequel il est inséré, il est important de favoriser une bonne cohésion entre l'objet et l'élastomère qui l'entoure. On peut prévoir un traitement de la surface extérieure de l'objet avec un adhésif tel que par exemple le Chémosyl ou tout autre produit approprié.

Le positionnement de l'antenne réceptrice 2 en sommet du pneumatique permet d'effectuer un télécontrôle de l'objet en continu lors du roulage. Cette position se justifie quand beaucoup de signaux transitent entre le dispositif de réception et le dispositif d'émission. C'est notamment le cas lorsque l'objet est un capteur de force destiné à reconstruire l'adhérence au sol du pneumatique.

D'autres positions sont envisageables à la fois pour l'antenne réceptrice et pour l'objet comme on le verra par la suite.

Le complexe 14 incluant les deux feuilles électriquement isolantes 13 permet de réaliser les parties en boucle 2.1, 2.2 avec un conducteur 9 métallique nu, c'est-à-dire non revêtu d'isolant électrique. Le coût en est réduit par rapport à l'utilisation de conducteurs isolés et l'adhésion aux feuilles 13 bien meilleure. Le conducteur 9 peut comporter un ou plusieurs fils tels que ceux de renforcement utilisés habituellement pour réaliser la carcasse ou les armatures de sommet du pneumatique. Avantageusement ces fils peuvent être en acier laitonné en surface de manière à allier à la fois robustesse et adhésion avec le matériau des feuilles 13 grâce à la présence du laiton.

On peut envisager toutefois de coller le conducteur 9 aux feuilles 13 par un procédé de collage connu dans le domaine des pneumatiques. Une bonne adhésion des fils aux feuilles permet d'obtenir une bonne tenue dans le temps du pneumatique selon l'invention.

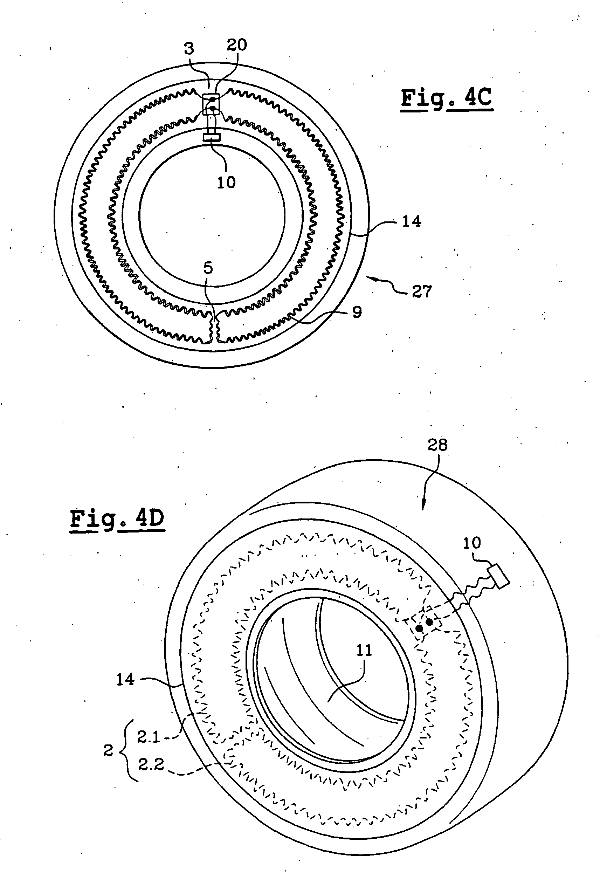

Lorsque le conducteur 9 comporte plusieurs fils, ces derniers peuvent former un câblé tel que celui utilisé classiquement dans les pneumatiques, cette configuration offre une bonne possibilité de déformation lors du roulement. Un tel câblé est représenté à la figure 4C.

Le conducteur 9 peut être ondulé lorsqu'il est positionné dans le pneumatique, cela permet de perturber au minimum la mécanique du pneumatique, le pas de l'ondulation peut être réglé en fonction de la gamme du pneumatique et des niveaux d'efforts et/ou de déformations qu'il va être amené à subir lors de son fonctionnement.

On peut implanter l'objet 10 dans le volume interne 22 délimité par le pneumatique et destiné à être plein d'air. Dans cette configuration l'objet 10 peut être par exemple un capteur de pression ou de température éventuellement associé à une étiquette électronique. On se réfère aux figures 2A et 2B qui montrent respectivement une vue de la carcasse 11 supportant une antenne réceptrice 2 d'un pneumatique selon l'invention et une coupe radiale du pneumatique monté sur une jante 23.

L'antenne réceptrice 2, formée de plusieurs parties en boucle 2.1, 2.2 dans un montage parallèle, est localisée comme dans le mode de réalisation des figures 1. Mais maintenant, elle est reliée à l'objet 10 par des conducteurs 21 de connexion qui sortent du complexe 14 vers l'intérieur du pneumatique, à l'opposé de la bande de roulement 16. Ils traversent les armatures de sommet 15, la carcasse 11 et la couche interne d'étanchéité 17 avant de faire saillie dans le volume interne 22. L'objet 10 peut être solidaire de la surface intérieure du pneumatique (comme sur la figure 2A) ou bien de la jante 23 (comme sur la figure 2B). La jante 23 prend appui sur un bourrelet 26 qui ceinture le pneumatique en partie basse du flanc 27.

Lors de la fabrication d'un tel pneumatique, on fore un trou 24 au travers des armatures de sommet 15, de la carcasse 11 et de la couche d'étanchéité 17 superposées, avant de présenter le complexe 14. Les conducteurs de connexion 21, individuellement recouverts de matériau électriquement isolant, tel qu'un élastomère, sont insérés dans le trou 24 lors de la mise en place du complexe 14 sur les armatures de sommet 15. Le trou 24 est ensuite rebouché de l'intérieur avec un élastomère, par exemple de même nature que celui de la couche interne d'étanchéité 17. La cuisson en moule du pneumatique peut alors avoir lieu.

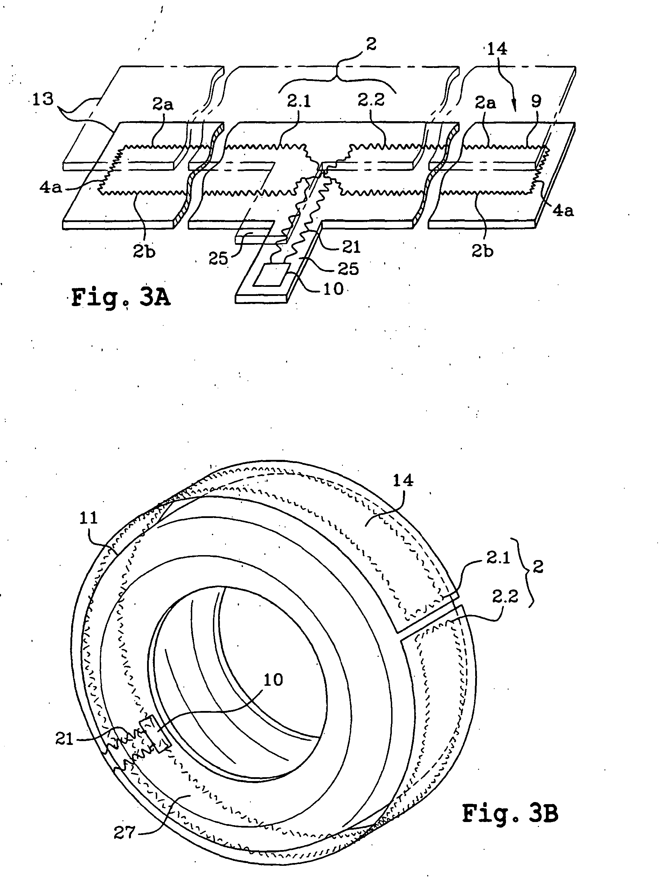

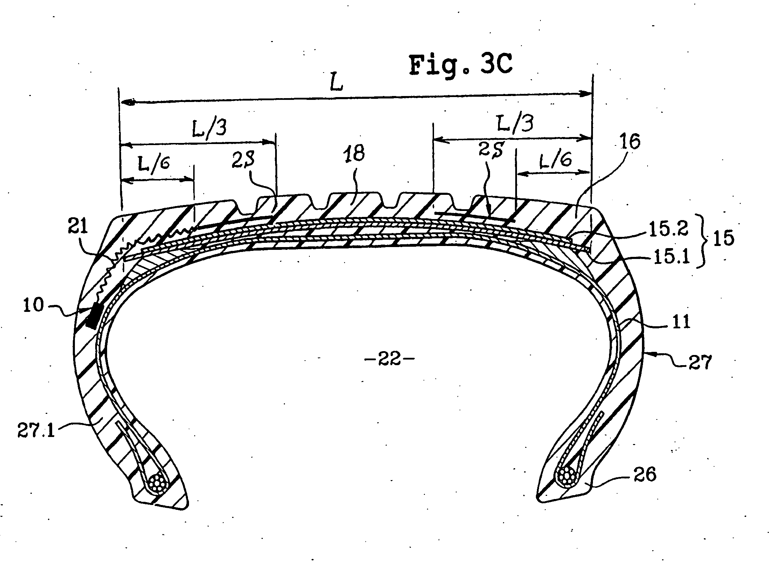

On peut être amené à implanter l'objet 10 dans le flanc 27 du pneumatique. Cette implantation est illustrée aux figures 3A, 3B, 3C. Elle est particulièrement adaptée à la mesure de grandeurs en temps réel dans le pneumatique. L'antenne réceptrice 2 et l'antenne réceptrice 2S sont similaires à celles illustrées aux figures 1 et 2. Sur la figure 3A, l'antenne réceptrice 2 (ou 2S) est représentée déroulée à plat en sandwich entre les deux feuilles 13 du complexe 14.

Les conducteurs de connexion 21 destinés à relier l'antenne réceptrice 2 à l'objet 10 vont courir dans le flanc 27 du pneumatique. Le complexe 14 comporte une extension 25 et les conducteurs de connexion 21 sont situés dans le complexe 14 au niveau de l'extension 25. Lors du positionnement du complexe 14 sur la carcasse 11, l'extension 25 est rabattue sur la partie de la carcasse correspondant au flanc 27 du pneumatique.

Sur la figure 3B, on ne voit que le complexe 14 incluant l'antenne réceptrice 2, il entoure la carcasse 11 , avant la pose de la bande de roulement. Une fois la bande de roulement posée, la bande de gomme constituant le flan extérieur du pneumatique, c'est-à-dire celle située entre la carcasse 11 et l'extérieur du pneu, qui était à ce stade de l'élaboration du bandage, retroussée sur la zone basse, est rabattue sur la carcasse 11, recouvrant notamment l'extension 25 du complexe 14.

L'objet 10 peut être implanté dans une zone quelconque du flanc 27, soit dans la partie centrale du flanc 27 comme sur la figure 3C, soit plus près de la bande de roulement 16, c'est à dire dans l'épaule, soit dans la zone basse du pneumatique, comme sur la figure 3B, à proximité du bourrelet 26 sur lequel prend appui la jante (non représentée).

Lors de la fabrication du pneumatique, lorsqu'il est encore cru, une partie de l'élastomère chargé réalisant le flanc extérieur 27.1 est retroussée pour positionner l'objet 10 et le connecter à l'antenne réceptrice 2. La partie retroussée est ensuite rabattue au-dessus de l'objet 10 avant la cuisson en moule.

On a décrit ci-dessus une disposition particulière de l'antenne ; celle-ci est telle que le conducteur 9 est disposé radialement extérieurement relativement à l'armature de sommet du pneumatique. En variante, l'antenne est telle que le conducteur 9 est disposé entre la gomme intérieure et l'armature de carcasse dudit pneumatique, ou encore entre l'armature de sommet et l'armature de carcasse dudit pneumatique.

Ajoutons qu'il est avantageux, d'un point de vue mécanique, de disposer le conducteur 9 dans des endroits du pneumatique de moindre sollicitation mécanique, même si cela ne correspond pas nécessairement à l'optimum d'un point de vue électrique ou électromagnétique. C'est ce que vise plus spécifiquement l'illustration de la figure 3C. Ainsi, dans le cas d'une implantation dans la zone de la bande de roulement, si l'on désigne par L la largeur axiale de l'armature de ceinture, la variante de l'antenne réceptrice 2S illustrée à la figure 3C comprend un conducteur 9 disposé en une ou plusieurs boucles et ayant des brins s'étendant sensiblement circonférentiellement, lesdits brins s'étendant sensiblement circonférentiellement étant disposés axialement uniquement dans l'une ou l'autre des deux zones comprises entre des limites situées axialement l'une à une distance de L/6 d'une extrémité axiale de ladite armature de sommet et l'autre à une distance de L/3 d'une extrémité axiale de ladite armature de sommet. Ainsi, on voit à la figure 3C que l'antenne 2S a un conducteur « aller » positionné dans la zone préférentielle de gauche. Les conducteurs 21 de connexion rejoignent la partie de l'antenne réceptrice 2S située à gauche sur la figure. On voit également à la figure 3C que l'antenne 2S selon cette variante comporte un conducteur « retour » positionné dans la zone préférentielle de droite. Signalons que les conducteurs reliant la partie gauche à la partie droite sont de préférence disposés parallèlement à l'axe de rotation du pneumatique, afin de ne subir que des sollicitations négligeables lors de la mise à plat de la bande de roulement au passage dans l'aire de contact avec le sol à chaque tour du pneumatique. A contrario, aux figures 3A et 3B, bien que l'allure générale de l'antenne soit fort similaire, l'absence d'indication sur le positionnement axial du conducteur de l'antenne signifie qu'il peut être quelconque.

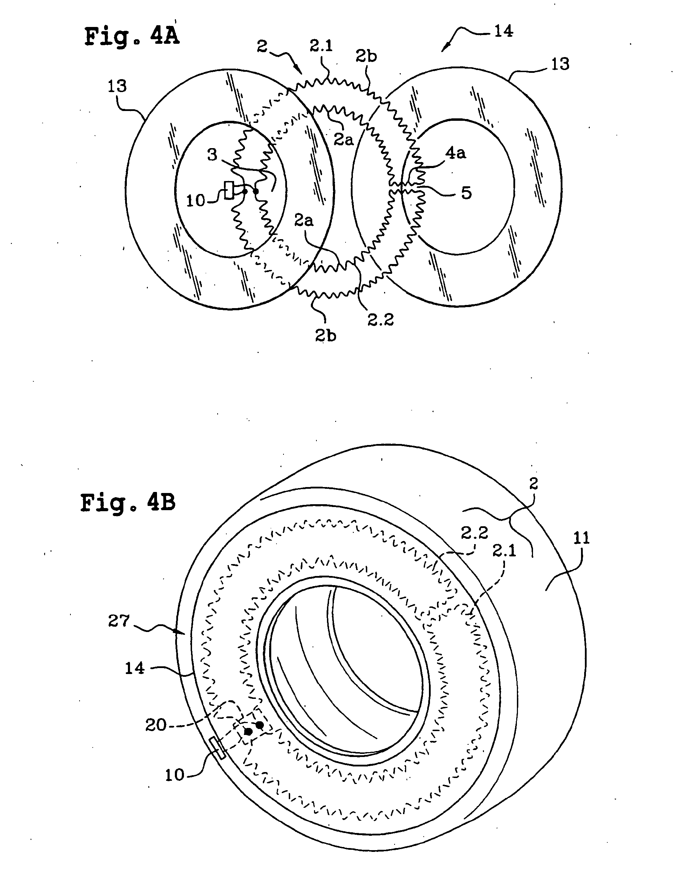

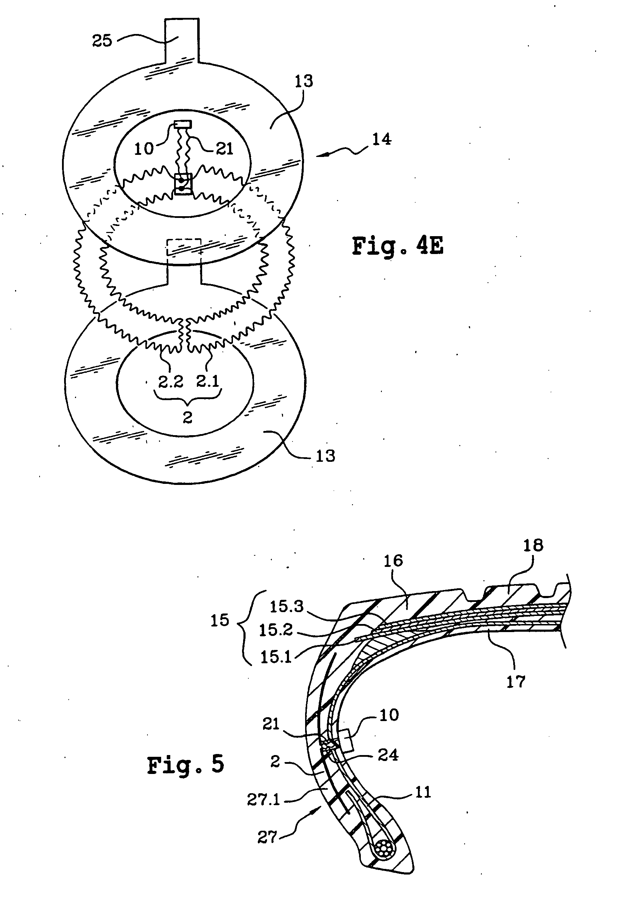

Au lieu d'être implantée sous la bande de roulement, l'antenne réceptrice 2 peut être implantée dans le flanc 27 du pneumatique. Cette variante est illustrée aux figures 4. Notons que cette implantation dans un flanc peut aussi être utile avec une antenne formant une seule boucle, en deux C emboîtés reliés l'un à l'autre.

Sur la figure 4A, on aperçoit le complexe 14 qui comporte l'antenne réceptrice 2 prise en sandwich entre deux feuilles 13 électriquement isolantes en forme d'anneau. L'antenne réceptrice 2 est formée de plusieurs parties en boucle 2.1, 2.2 agencées dans un montage parallèle. Dans cet exemple, on a représenté deux parties en boucle 2.1, 2.2 de forme demi-circulaire.

Les deux feuilles 13 peuvent être similaires à celles décrites à la figure 1A au point de vue épaisseur et composition.

Les parties en boucle comportent deux grandes portions 2a, 2b sensiblement en portion de cercle, elles suivent les bords intérieur et extérieur du flanc 27. L'espacement entre les grandes portions 2a, 2b d'une même partie en boucle est sensiblement constant. Les grandes portions 2a, 2b sont disposées de manière que leur espacement relatif perturbe le moins possible la mécanique de roulage du pneumatique une fois celui-ci finalisé et vulcanisé. Les deux grandes portions 2a, 2b d'une même partie en boucle sont réunies, à une extrémité, par une petite portion 4a qui est représentée dirigée sensiblement selon un rayon du pneumatique. L'angle formé entre la petite portion 4a et les grandes portions 2a, 2b est sensiblement un angle droit. Il est bien entendu que cet angle pourrait être parfaitement quelconque et que les petites portions pourraient avoir une orientation autre que radiale par rapport au pneumatique.

A l'autre extrémité, les grandes portions 2a, 2b des parties en boucle 2.1, 2.2 se rapprochent pour former le montage parallèle. Les parties en boucle 2.1, 2.2 ainsi agencées sont reliées à l'objet 10.

Un espace 3 aussi faible que possible sépare du côté de l'objet 10, les deux parties en boucle 2.1, 2.2. Cet espace 3 est de préférence inférieur à environ 1 centimètre.

Les longueurs des grandes portions 2a, 2b des parties en boucle 2.1, 2.2 sont choisies pour que, lors du positionnement de l'antenne réceptrice dans le flanc 27, entre la carcasse 11 et le flanc extérieur 27.1 du pneumatique, les petites portions 4a de chacune des parties en boucle soient proches l'une de l'autre tout en étant sans contact l'une avec l'autre. Un espace 5 inférieur à environ un centimètre les séparent. La petite portion 4a pourrait mesurer environ 2 à 4 centimètres et les grandes portions 2a, 2b de l'ordre du mètre, l'espace 5 entre les petites portions 4a des deux parties en boucle pourrait valoir entre 0,1 et 0,5 centimètre par exemple.

Lors de la fabrication du pneumatique, lorsqu'il est encore cru, l'élastomère chargé réalisant le flanc extérieur 27.1 est posé sur la carcasse 11 sans qu'il n'y adhère. Il est retroussé sur la zone basse du pneumatique afin de pouvoir loger le complexe 14 sur la carcasse 11 au niveau de la zone correspondant au flanc 27.1 du pneumatique, puis rabattu.

L'objet 10 peut être placé dans le complexe 14 entre les deux feuilles 13 comme sur la figure 4A ou bien être implanté à l'extérieur du complexe 14. Dans cette dernière configuration, l'une des feuilles 13 du complexe comporte une ouverture 20 pour laisser passer les conducteurs 21 de connexion de l'antenne réceptrice 2 à l'objet 10. Sur les figures 4B à 4E, l'objet 10 est implanté à l'extérieur du complexe.

Sur la figure 4B, l'objet 10 est implanté dans le flanc 27 et plus particulièrement dans l'épaule du pneumatique tandis que sur la figure 4C, il est toujours dans le flanc 27 mais dans la partie basse du pneumatique. On suppose sur cette figure que la feuille 13 située vers l'extérieur du pneumatique a été ôtée pour laisser apparaître le conducteur 9 prenant la forme d'un câblé.

Sur la figure 4D, l'objet 10 est implanté dans la zone de sommet 28 du pneumatique sous la bande de roulement (non représentée). Le complexe 14 convenant pour ce mode de réalisation est représenté à la figure 4E. Il comporte de manière analogue à celui de la figure 3A une extension 25 dans laquelle se trouvent les conducteurs 21 de connexion de l'antenne réceptrice 2 à l'objet 10.

Lors de la pose du complexe 14 sur la carcasse au niveau d'une zone correspondant au flanc du pneumatique, l'extension 25 est rabattue sur les armatures de sommet qui entourent la carcasse 11 au niveau du sommet du pneumatique. La bande de roulement peut ensuite être rapportée et les flancs extérieurs rabattus.

Sur la figure 5, on a représenté encore une autre variante d'implantation de l'objet 10, l'antenne réceptrice 2 étant toujours localisée dans le flanc 27 du pneumatique. Dans cette variante l'objet 10 se trouve dans le volume interne 22 délimité par le pneumatique. Il est solidaire de la surface intérieure du pneumatique. Il pourrait être solidaire de la jante comme sur la figure 2B. Comme sur les figures 2A, 2B, un trou 24 a été foré à travers la carcasse 11 et la couche d'étanchéité 17 superposées, avant de poser le complexe 14. Les conducteurs de connexion 21, individuellement recouverts de matériau électriquement isolant, tel qu'un élastomère, sont insérés dans le trou 24 lors de la mise en place du complexe 14 sur la carcasse 11. Le trou 24 est ensuite rebouché de l'intérieur avec un élastomère peu ou pas chargé avec des charges conductrices, par exemple de même nature que celui de la couche interne d'étanchéité 17. Le moulage et la cuisson du pneumatique peuvent être réalisés.

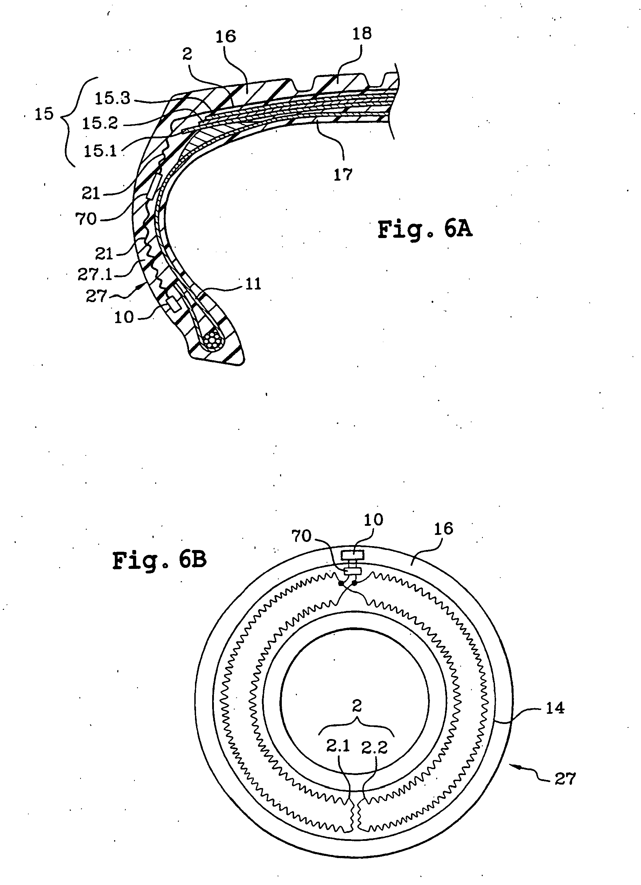

Au moins un circuit électronique 70 peut coopérer avec l'objet 10. Il peut avoir une fonction d'amplification ou de mise en forme par exemple. Ce circuit électronique peut ne pas être solidaire du capteur et être connecté entre l'antenne réceptrice 2 et l'objet 10. Tout ou partie du circuit électronique peut être localisé dans le pneumatique. Sur la figure 6A, on a représenté une coupe transversale partielle d'un pneumatique selon l'invention. Ce dernier est doté d'une antenne réceptrice 2 localisée sous la bande de roulement 16, d'un circuit électronique 70 situé dans le flanc 27 du pneumatique dans la partie centrale de ce dernier et d'un objet 10 également dans le flanc 27 mais dans sa partie basse. Sur la figure 6B, l'antenne réceptrice 2 se trouve dans le flanc 27 du pneumatique, le circuit électronique 70 se trouve également dans le flanc 27 à proximité de la liaison entre les parties en boucle 2.1, 2.2 de l'antenne réceptrice 2 et l'objet 10 se trouve dans la zone de sommet 28 du pneumatique. Le circuit électronique 70 pourrait être placé entre les deux feuilles 13 du complexe. On pourrait également envisager de placer le circuit électronique 70 dans le volume interne 22 délimité par le pneumatique.

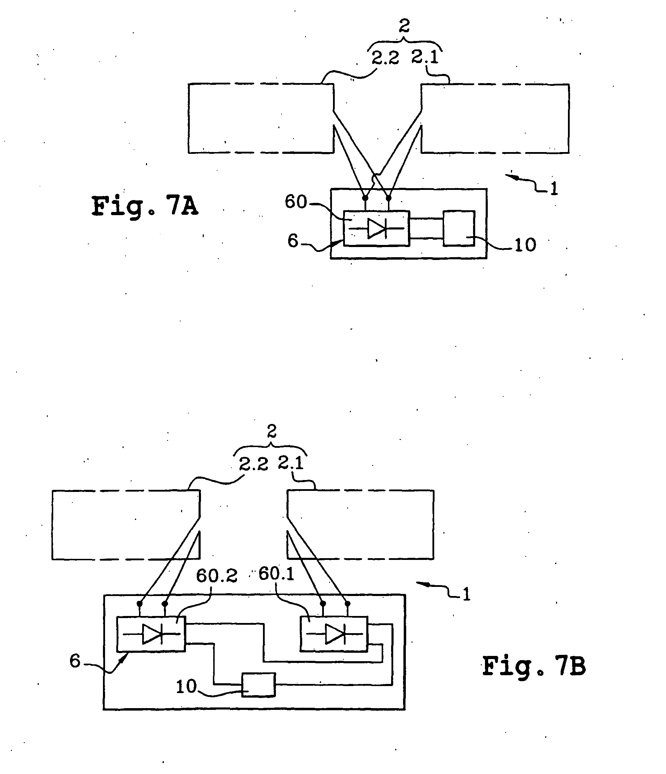

On va maintenant s'intéresser à la connexion entre les extrémités des parties en boucle 2.1, 2.2 de l'antenne réceptrice 2 et l'objet 10 et se référer aux figures 7A, 7B. Les parties en boucle 2.1, 2.2 sont représentées mises à plat pour simplifier le dessin. La connexion se fait par l'intermédiaire du circuit électronique 6 qui peut avoir une fonction de redresseur.

Ce circuit électronique 6 peut comporter un seul circuit de redressement 60 comme sur la figure 7A ou plusieurs 60.1, 60.2 comme sur la figure 7B.

Sur la figure 7A, toutes les parties en boucle 2.1, 2.2 de l'antenne réceptrice 2 sont connectées en parallèle à l'entrée du circuit de redressement 60, l'objet 10 est connecté lui à la sortie du circuit de redressement 60 et son entrée reçoit de ce dernier, une tension redressée qui dépend des tensions apportées à l'entrée du circuit de mise en forme par chacune des parties en boucle 2.1, 2.2.

La connexion en parallèle s'effectue avant redressement au niveau du signal induit dans l'antenne réceptrice.

Sur la figure 7B, chaque partie en boucle 2.1, 2.2 est connectée à l'entrée d'un circuit de redressement qui lui est propre, soit respectivement 60.1, 60.2 et les sorties des circuits de redressement coopèrent en série avec l'objet 10 de manière à ce qu'il reçoive la somme des tensions présentes en sortie des différents circuits de redressement 60.1, 60.2. En fait, puisque les parties en boucle travaillent successivement et continûment, on n'obtient jamais au niveau de l'objet la somme des signaux induits dans chacune des parties en boucle. En sortie des circuits de mise en forme les signaux sont continus et on peut les sommer, cela n'est pas possible avant leur conversion.

La configuration de la figure 7A avec un seul circuit de redressement 60 est plus intéressante du point de vue coût et encombrement mais également du point de vue robustesse aux perturbations. Il vaut mieux faire une seule transformation sur un signal somme que plusieurs suivies d'une sommation.

Par ailleurs, il faut remarquer que les parties en boucle n'ont pas besoin d'être fermées, c'est à dire que les deux extrémités des parties en boucle n'ont pas besoin d'être reliées électriquement à l'objet, une liaison avec une seule de ces extrémités suffit. Les capacités parasites dues à l'environnement assurent le bouclage de la partie en boucle sur l'objet. Les figures 7C et 7D illustrent une telle configuration. Chacune des parties en boucle 2.1, 2.2 possède une extrémité «en l'air» et une extrémité reliée au circuit électronique 6. Les capacités parasites sont schématisées en pointillés.

Sur le zoom de la figure 8, on a représenté de manière agrandie la connexion des parties en boucle 2.1, 2.2 à l'objet 10 en omettant le circuit électronique pour ne pas surcharger la figure. Des condensateurs d'accord c1, c2 ont été placés en parallèle sur chacune des parties en boucle 2.1, 2.2, ils sont localisés au niveau des extrémités qui sont reliées à l'objet 10.

Bien que plusieurs modes de réalisation de la présente invention aient été représentés et décrits de façon détaillée, on comprendra que différents changements et modifications puissent être apportés sans sortir du cadre de l'invention. Notamment la présente invention n'est pas limitée aux formes d'antennes réceptrices présentées, plusieurs objets peuvent être reliés à une même antenne réceptrice, ces derniers étant télécontrôlés depuis le dispositif émissif par l'intermédiaire de l'antenne réceptrice. Ils peuvent être implantés à des endroits différents, on peut envisager que chacun des flancs soit doté d'au moins un objet.

## Revendications

1. Pneumatique équipé d'au moins une antenne réceptrice (2) d'un dispositif de réception (1) qui inclut un objet (10) destiné à être télécontrôlé par couplage électromagnétique avec au moins une antenne émissive (8), cette antenne réceptrice (2) étant destinée à être reliée à l'objet (10), **caractérisé en ce que** l'antenne réceptrice (2) est morcelée en plusieurs parties en boucle (2.1, 2.2) agencées en un montage parallèle, ces parties en boucle (2.1, 2.2) ayant chacune une surface (s1, s2), ces surfaces (s1, s2) étant globalement juxtaposées de manière à ce que les parties en boucle (2.1, 2.2) se couplent successivement et continûment à l'antenne émissive (8).

2. Pneumatique selon la revendication 1, **caractérisé en ce que** l'antenne réceptrice (2) possède une surface utile de réception (s) qui est sensiblement égale à la somme des surfaces (s1, s2) de toutes les parties en boucle (2.1, 2.2).

3. Pneumatique selon l'une des revendications 1 ou 2, **caractérisé en ce que** les parties en boucle (2.1, 2.2) sont formées d'un conducteur (9), une portion (4a) de conducteur d'une première partie en boucle (2.1) et une portion (4a) de conducteur d'une seconde partie en boucle (2.2) voisine de la première partie en boucle (2.1) étant séparées par un espace (5) aussi faible que possible.

4. Pneumatique selon l'une des revendications 1 à 3, **caractérisé en ce que** deux parties en boucle (2.1, 2.2) sont séparées, du côté de l'objet (10), par un espace (3) aussi faible que possible.

5. Pneumatique selon l'une des revendications 1 à 4, **caractérisé en ce qu'**un condensateur d'accord (c1, c2) est monté en parallèle avec au moins une des parties en boucle (2.1, 2.2) pour accorder la dite partie en boucle (2.1, 2.2) sur l'antenne émissive (8).

6. Pneumatique selon l'une des revendications 1 à 5, **caractérisé en ce que** l'antenne réceptrice (2) est immobilisée entre deux feuilles (13) d'un matériau électriquement isolant pour former un complexe (14), ce complexe (14) étant implanté dans le pneumatique.

7. Pneumatique selon la revendication 6, comportant, dans une zone de sommet (28), au moins une armature de sommet (15.1, 15.2, 15.3) entourée par une bande de roulement (16),
**caractérisé en ce que** le complexe (14) est inséré entre la armature de sommet (15.1, 15.2, 15.3) et la bande de roulement (16).

8. Pneumatique selon la revendication 7, **caractérisé en ce que** les feuilles (13) du complexe (14) sont réalisées dans un matériau ayant des propriétés mécaniques proches de celles de la bande de roulement (16).

9. Pneumatique selon l'une des revendications 3 à 8, **caractérisé en ce que** ledit conducteur (9) est disposé entre la gomme intérieure et ladite armature de carcasse dudit pneumatique.

10. Pneumatique selon l'une des revendications 3 à 8, **caractérisé en ce que** ledit conducteur (9) est disposé entre ladite armature de sommet et ladite armature de carcasse dudit pneumatique.

11. Pneumatique selon l'une des revendications 3 à 8, **caractérisé en ce que** ledit conducteur (9) est disposé radialement extérieurement relativement à ladite armature de sommet..

12. Pneumatique selon l'une des revendications 7 à 11, dans lequel ladite armature de ceinture s'étend axialement sur une distance L, **caractérisé en ce que** l'antenne réceptrice (2S) comprend un conducteur (9) disposé en une ou plusieurs boucles et ayant des brins s'étendant sensiblement circonférentiellement, lesdits brins s'étendant sensiblement circonférentiellement étant disposés axialement uniquement dans l'une ou l'autre des deux zones comprises entre des limites situées axialement l'une à une distance de L/6 d'une extrémité axiale de ladite armature de sommet et l'autre à une distance de L/3 d'une extrémité axiale de ladite armature de sommet.

13. Pneumatique selon la revendication 6, comportant une carcasse (11) recouverte, vers l'extérieur du pneumatique, d'un flanc extérieur (27.1), **caractérisé en ce que** le complexe (14) est inséré entre la carcasse (11) et le flanc extérieur (27.1).

14. Pneumatique selon l'une des revendications 6 à 13, **caractérisé en ce que** les feuilles (13) sont réalisées dans un élastomère chargé en silice et en noir de carbone, ce matériau étant peu chargé en noir de carbone de manière à le rendre électriquement isolant.

15. Pneumatique selon l'une des revendications 1 à 14, **caractérisé en ce que** les parties en boucle (2.1, 2.2) sont réalisées avec un conducteur (9) métallique nu.

16. Pneumatique selon la revendication 15, **caractérisé en ce que** le conducteur (9) comporte un ou plusieurs fils.

17. Pneumatique selon l'une des revendications 15 ou 16, comportant des fils de renforcement, **caractérisé en ce que** le conducteur (9) comporte un ou plusieurs fils de même nature que les fils de renforcement.

18. Pneumatique selon l'une des revendications 15 à 17, **caractérisé en ce que** le conducteur (9) comporte un ou plusieurs fils en acier laitonné en surface.

19. Pneumatique selon l'une des revendications 15 à 18, **caractérisé en ce que** le conducteur (9) est ondulé.

20. Pneumatique selon l'une des revendications 15 à 19 pour autant qu'elles dépendent de la revendication 6, **caractérisé en ce que** le conducteur (9) est collé à au moins une des feuilles (13) du complexe (14).

21. Pneumatique selon l'une des revendications 1 à 20, **caractérisé en ce qu**'il est équipé de l'objet (10).

22. Pneumatique selon l'une des revendications 1 à 21, **caractérisé en ce qu**'il est équipé d'un circuit électronique (70) qui coopère avec l'objet (10).

23. Pneumatique selon la revendication 22, **caractérisé en ce que** le circuit électronique comporte un circuit redresseur unique (60), les parties en boucle (2.1, 2.2) ayant au moins une extrémité reliée en entrée du circuit redresseur (60), l'objet (10) étant relié en sortie du circuit redresseur (60).

24. Pneumatique selon la revendication 22, **caractérisé en ce que** le circuit électronique comporte plusieurs circuits redresseurs (60.1, 60.2), chaque partie en boucle ayant au moins une extrémité reliée en entrée d'un circuit redresseur (60.1, 60.2), les circuits redresseurs ayant leurs sorties reliées en série avec l'objet (10).

25. Pneumatique selon l'une des revendications 21 à 24, comportant une zone de sommet (28), **caractérisé en ce que** l'objet (10) et/ou le circuit électronique (70) est/sont localisé(s) dans la zone de sommet (28).

26. Pneumatique selon l'une des revendications 21 à 25, comportant un flanc (27), **caractérisé en ce que** l'objet (10) et/ou le circuit électronique (70) est/sont localisé(s) dans le flanc (27).

27. Pneumatique selon l'une des revendications 21 à 26, délimitant un volume interne (22), **caractérisé en ce que** l'objet (10) et/ou le circuit électronique (70) est/sont localisé(s) dans le volume interne (22).

28. Pneumatique selon l'une des revendications 21 à 27 pour autant qu'elles dépendent de la revendication 6, **caractérisé en ce que** l'objet et/ou le circuit électronique est/sont localisé(s) dans le complexe (14).

29. Pneumatique selon l'une des revendications 1 à 28, **caractérisé en ce que** l'objet (10) comporte au moins un élément du groupe formé d'un capteur, d'un compteur, d'une étiquette électronique.

30. Procédé de réalisation d'un pneumatique comportant les étapes suivantes :
- préparation d'une carcasse (11),
- préparation d'un complexe (14) comportant une antenne réceptrice (2) morcelée en plusieurs parties en boucle (2.1, 2.2) agencées en un montage parallèle, cette antenne réceptrice étant immobilisée entre deux feuilles (13) d'un matériau électriquement isolant, préférentiellement en matériau élastomère non vulcanisé, compatible avec les matériaux habituels du pneumatique, en prévoyant une liaison (21) avec au moins un objet (10) destiné à être télécontrôlé par couplage électromagnétique entre l'antenne réceptrice (2) et au moins une antenne émissive (8),
- pose du complexe (14) sur la carcasse (11),
- recouvrement du complexe (14) par un élastomère chargé et finition de manière à obtenir un pneumatique cru,
- moulage et vulcanisation du pneumatique cru.

31. Procédé selon la revendication 30, **caractérisé en ce que** l'élastomère chargé forme une bande de roulement (16) du pneumatique.

32. Procédé selon l'une des revendications 30 ou 31, **caractérisé en ce que** l'élastomère chargé contribue à former un flanc (27) du pneumatique.

33. Procédé selon l'une des revendications 30 à 32, **caractérisé en ce qu**'il comporte une étape de pose d'au moins une armature de sommet (15) sur la carcasse (11) avant la pose du complexe (14).

34. Procédé selon l'une des revendications 30 à 33, **caractérisé en ce qu**'il comporte une étape de forage dans la carcasse (11) d'un trou (24) débouchant dans un volume interne (22) délimité par le pneumatique, ce trou (24) étant destiné à contenir des conducteurs de connexion (21) pour la liaison entre l'antenne réceptrice (2) et l'objet (10), l'objet se trouvant dans le volume interne (22).

35. Procédé selon la revendication 34, **caractérisé en ce que** l'étape de forage est suivie d'une étape de rebouchage avant cuisson, par l'intérieur du pneumatique, du trou (24) foré contenant les conducteurs (21).

36. Procédé selon l'une des revendications 30 à 35, **caractérisé en ce que** l'étape de préparation du complexe (14) inclut la réalisation d'au moins une extension (25) dans laquelle sont immobilisés des conducteurs de connexion (21) pour la liaison entre l'antenne réceptrice (2) et l'objet (10), cette extension (25) étant rabattue sur un flanc (27) du pneumatique lorsque le complexe (14) est posé sur une zone de sommet (28) du pneumatique ou sur la zone de sommet (28) lorsque le complexe (14) est posé sur le flanc (27).

## Claims

1. Tyre equipped with at least one receiving antenna (2) of a reception device (1) which includes an object (10) intended to be remote controlled by electromagnetic coupling with at least one transmitting antenna (8), this receiving antenna (2) being intended to be connected to the object (10), **characterised in that** the receiving antenna (2) is divided into several loop parts (2.1, 2.2) arranged in a parallel circuit, these loop parts (2.1, 2.2) each having a surface (s1, s2), these surfaces (s1, s2) being roughly juxtaposed so that the loop parts (2.1, 2.2) are coupled successively and continuously to the transmitting antenna (8).

2. Tyre according to Claim 1, **characterised in that** the receiving antenna (2) has a useful reception surface (s) which is substantially equal to the sum of the surfaces (s1, s2) of all the loop parts (2.1, 2.2).

3. Tyre according to one of Claims 1 or 2, **characterised in that** the loop parts (2.1, 2.2) are formed by a conductor (9), a portion (4a) of a conductor of a first loop part (2.1) and a portion (4a) of a conductor of a second loop part (2.2) adjacent to the first loop part (2.1) being separated by a space (5) which is as small as possible.

4. Tyre according to one of Claims 1 to 3, **characterised in that** two loop parts (2.1, 2.2) are separated, on the object (10) side, by a space (3) which is as small as possible.

5. Tyre according to one of Claims 1 to 4, **characterised in that** a tuning capacitor (c1, c2) is connected in parallel with at least one of the loop parts (2.1, 2.2) in order to tune the said loop part (2.1, 2.2) to the transmitting antenna (8).

6. Tyre according to one of Claims 1 to 5, **characterised in that** the receiving antenna (2) is immobilised between two sheets (13) of an electrically insulating material in order to form a complex (14), this complex (14) being located in the tyre.

7. Tyre according to Claim 6, comprising, in a crown area (28), at least one crown reinforcement (15.1, 15.2, 15.3) surrounded by a tread (16), **characterised in that** the complex (14) is inserted between the crown reinforcement (15.1, 15.2, 15.3) and the tread (16).

8. Tyre according to Claim 7, **characterised in that** the sheets (13) of the complex (14) are produced from a material having mechanical properties close to those of the tread (16).

9. Tyre according to one of Claims 3 to 8, **characterised in that** the said conductor (9) is disposed between the inner liner and the said carcass reinforcement of the said tyre.

10. Tyre according to one of Claims 3 to 8, **characterised in that** the said conductor (9) is disposed between the said crown reinforcement and the said carcass reinforcement of the said tyre.

11. Tyre according to one of Claims 3 to 8, **characterised in that** the said conductor (9) is disposed radially externally relative to the said crown reinforcement.

12. Tyre according to one of Claims 7 to 11, in which the said belt reinforcement extends axially over a distance L, **characterised in that** the receiving antenna (2S) comprises a conductor (9) disposed in one or more loops and having a length extending substantially circumferentially, the said lengths extending substantially circumferentially being disposed axially only in one or other of the two areas lying between limits situated axially one at a distance of L/6 from an axial end of the said crown reinforcement and the other at a distance of L/3 from an axial end of the said crown reinforcement.

13. Tyre according to Claim 6, comprising a carcass (11) covered, towards the outside of the tyre, with an external sidewall (27.1), **characterised in that** the complex (14) is inserted between the carcass (11) and the external sidewall (27.1).

14. Tyre according to one of Claims 6 to 13, **characterised in that** the sheets (13) are produced from an elastomer containing silica and carbon black, this material having only a little carbon black filler so as to make it electrically insulating.

15. Tyre according to one of Claims 1 to 14, **characterised in that** the loop parts (2.1, 2.2) are produced with a bare metallic conductor (9).

16. Tyre according to Claim 15, **characterised in that** the conductor (9) comprises one or more cords.

17. Tyre according to one of Claims 15 or 16, comprising reinforcement cords, **characterised in that** the conductor (9) comprises one or more cords with the same nature as the reinforcement cords.

18. Tyre according to one of Claims 15 to 17, **characterised in that** the conductor (9) comprises one or more steel wires brass-coated on the surface.

19. Tyre according to one of Claims 15 to 18, **characterised in that** the conductor (9) is corrugated.

20. Tyre according to one of Claims 15 to 19 in so far as they depend on Claim 16, **characterised in that** the conductor (9) is glued to at least one of the sheets (13) of the complex (14).

21. Tyre according to one of Claims 1 to 20, **characterised in that** it is equipped with the object (10).

22. Tyre according to one of Claims 1 to 21, **characterised in that** it is equipped with an electronic circuit (70) which cooperates with the object (10).

23. Tyre according to Claim 22, **characterised in that** the electronic circuit comprises a single rectifying circuit (60), the loop parts (2.1, 2.2) having at least one end connected to the input of the rectifying circuit (60), the object (10) being connected to the output of the rectifying circuit (60).

24. Tyre according to Claim 22, **characterised in that** the electronic circuit comprises several rectifying circuits (60.1, 60.2), each loop part having at least one end connected to the input of a rectifying circuit (60.1, 60.2), the rectifying circuits having their outputs connected in series with the object (10).

25. Tyre according to one of Claims 21 to 24, comprising a crown area (28), **characterised in that** the object (10) and/or the electronic circuit (70) is/are located in the crown area (28).

26. Tyre according to one of Claims 21 to 25, comprising a sidewall (27), **characterised in that** the object (10) and/or the electronic circuit (70) is/are located in the sidewall (27).

27. Tyre according to one of Claims 21 to 26, delimiting an internal volume (22), **characterised in that** the object (10) and/or the electronic circuit (70) is/are located in the internal volume (22).

28. Tyre according to one of Claims 21 to 27 in so far as they depend on Claim 6, **characterised in that** the object and/or the electronic circuit is/are located in the complex (14).

29. Tyre according to one of Claims 1 to 28, **characterised in that** the object (10) comprises at least one element in the group formed by a sensor, a counter and an electronic label.

30. Method of producing a tyre comprising the following steps:
- preparing a carcass (11),
- preparing a complex (14) comprising a receiving antenna (2) divided into several loop parts (2.1, 2.2) arranged in a parallel circuit, this receiving antenna being immobilised between two sheets (13) of an electrically insulating material, preferably made from non-vulcanised elastomer material, compatible with the normal materials of the tyre, providing a connection (21) with at least one object (10) intended to be remote controlled by electromagnetic coupling between the receiving antenna (2) and at least one transmitting antenna (8),
- installing the complex (14) on the tyre (11),
- covering the complex (14) with an elastomer with a filler and finishing so as to obtain an uncured tyre,
- moulding and vulcanising the uncured tyre.

31. Method according to Claim 30, **characterised in that** the elastomer with filler forms a tread (16) of the tyre.

32. Method according to one of Claims 30 or 31, **characterised in that** the elastomer with filler contributes to forming a sidewall (27) of the tyre.

33. Method according to one of Claims 30 to 32, **characterised in that** it comprises a step of placing at least one crown reinforcement (15) on the carcass (11) before fitting the complex (14).

34. Method according to one of Claims 30 to 33, **characterised in that** it comprises a step of drilling in the carcass (11) a hole (24) opening out in the internal volume (22) delimited by the tyre, this hole (24) being intended to contain connection conductors (21) for the connection between the receiving antenna (2) and the object (10), the object being situated in the internal volume (22).

35. Method according to Claim 34, **characterised in that** the drilling step is followed by a step of replugging the drilled hole (24) containing the conductors (21) from the inside of the tyre before curing.

36. Method according to one of Claims 30 to 35, **characterised in that** the step of preparing the complex (14) includes the production of at least one extension (25) in which there are immobilised connection conductors (21) for the connection between the receiving antenna (2) and the object (10), this extension (25) being folded over a sidewall (27) of the tyre when the complex (14) is placed on a crown area (28) of the tyre or on the crown area (28) when the complex (14) is placed on the sidewall (27).

## Patentansprüche

1. Luftreifen, der mit mindestens einer Empfangsantenne (2) einer Empfangsvorrichtung (1) versehen ist, die einen Gegenstand (10) umfasst, der dazu bestimmt ist, durch elektromagnetische Kopplung mit mindestens einer Sendeantenne (8) fernkontrolliert zu werden, wobei diese Empfangsantenne (2) dazu bestimmt ist, mit dem Gegenstand (10) verbunden zu werden, **dadurch gekennzeichnet, dass** die Empfangsantenne (2) in mehrere schleifenförmige Teile (2.1, 2.2) aufgeteilt ist, die in einem parallelen Aufbau angeordnet sind, wobei diese schleifenförmigen Teile (2.1, 2.2) je eine Fläche (s1, s2) haben, wobei diese Flächen (s1, s2) derart global nebeneinander angeordnet sind, dass die schleifenförmigen Teile (2.1, 2.2) nacheinander und kontinuierlich mit der Sendeantenne (8) gekoppelt werden.

2. Luftreifen nach Anspruch 1, **dadurch gekennzeichnet, dass** die Empfangsantenne (2) eine Empfangs-Nutzfläche (s) aufweist, die im Wesentlichen gleich der Summe der Flächen (s1, s2) aller schleifenförmigen Teile (2.1, 2.2) ist.

3. Luftreifen nach einem der Ansprüche 1 oder 2, **dadurch gekennzeichnet, dass** die schleifenförmigen Teile (2.1, 2.2) von einem Leiter (9) gebildet werden, wobei ein Leiterabschnitt (4a) eines ersten schleifenförmigen Teils (2.1) und ein Leiterabschnitt (4a) eines zweiten schleifenförmigen Teils (2.2), das dem ersten schleifenförmigen Teil (2.1) benachbart ist, durch einen kleinstmöglichen Zwischenraum (5) getrennt sind.

4. Luftreifen nach einem der Ansprüche 1 bis 3, **dadurch gekennzeichnet, dass** zwei schleifenförmige Teile (2.1, 2.2) auf der Seite des Gegenstands (10) durch einen kleinstmöglichen Zwischenraum (3) getrennt sind.

5. Luftreifen nach einem der Ansprüche 1 bis 4, **dadurch gekennzeichnet, dass** ein Abstimmkondensator (c1, c2) mit mindestens einem der schleifenförmigen Teile (2.1, 2.2) parallel angeordnet ist, um den schleifenförmigen Teil (2.1, 2.2) mit der Sendeantenne (8) abzustimmen.

6. Luftreifen nach einem der Ansprüche 1 bis 5, **dadurch gekennzeichnet, dass** die Empfangsantenne (2) zwischen zwei Folien (13) eines elektrisch isolierenden Werkstoffs festgehalten wird, um einen Komplex (14) zu bilden, wobei dieser Komplex (14) in den Luftreifen eingesetzt wird.

7. Luftreifen nach Anspruch 6, der in einer Scheitelzone (28) mindestens eine Scheitelbewehrung (15.1, 15.2, 15.3) aufweist, die von einer Lauffläche (16) umgeben ist, **dadurch gekennzeichnet, dass** der Komplex (14) zwischen die Scheitelbewehrung (15.1, 15.2, 15.3) und die Lauffläche (16) eingefügt wird.

8. Luftreifen nach Anspruch 7, **dadurch gekennzeichnet, dass** die Folien (13) des Komplexes (14) aus einem Werkstoff hergestellt werden, der mechanische Eigenschaften nahe denjenigen der Lauffläche (16) hat.

9. Luftreifen nach einem der Ansprüche 3 bis 8, **dadurch gekennzeichnet, dass** der Leiter (9) zwischen dem Innengummi und der Karkassenbewehrung des Luftreifens angeordnet ist.

10. Luftreifen nach einem der Ansprüche 3 bis 8, **dadurch gekennzeichnet, dass** der Leiter (9) zwischen der Scheitelbewehrung und der Karkassenbewehrung des Luftreifens angeordnet ist.

11. Luftreifen nach einem der Ansprüche 3 bis 8, **dadurch gekennzeichnet, dass** der Leiter (9) bezüglich der Scheitelbewehrung radial außen angeordnet ist.

12. Luftreifen nach einem der Ansprüche 7 bis 11, bei dem die Gürtelbewehrung sich axial über eine Entfernung L erstreckt, **dadurch gekennzeichnet, dass** die Empfangsantenne (2S) einen Leiter (9) aufweist, der in einer oder mehreren Schleifen angeordnet ist und Einzeldrähte aufweist, die sich im Wesentlichen in Umfangsrichtung erstrecken, wobei die Einzeldrähte, die sich im Wesentlichen in Umfangsrichtung erstrecken, axial nur in der einen oder der anderen der zwei Zonen angeordnet sind, die sich zwischen Grenzen befinden, die sich axial die eine in einer Entfernung L/6 von einem axialen Ende der Scheitelbewehrung und die andere in einer Entfernung L/3 von einem axialen Ende der Scheitelbewehrung befinden.

13. Luftreifen nach Anspruch 6, der eine nach außerhalb des Luftreifens von einer äußeren Flanke (27.1) bedeckte Karkasse (11) aufweist, **dadurch gekennzeichnet, dass** der Komplex (14) zwischen die Karkasse (11) und die äußere Flanke (27.1) eingefügt wird.

14. Luftreifen nach einem der Ansprüche 6 bis 13, **dadurch gekennzeichnet, dass** die Folien (13) aus einem mit Siliciumoxid und Russ angereicherten Elastomermaterial hergestellt werden, wobei dieser Werkstoff wenig mit Russ angereichert ist, um ihn elektrisch isolierend zu machen.

15. Luftreifen nach einem der Ansprüche 1 bis 14, **dadurch gekennzeichnet, dass** die schleifenförmigen Teile (2.1, 2.2) mit einem blanken metallischen Leiter (9) hergestellt werden.

16. Luftreifen nach Anspruch 15, **dadurch gekennzeichnet, dass** der Leiter (9) einen oder mehrere Drähte aufweist.

17. Luftreifen nach einem der Ansprüche 15 oder 16, der Verstärkungsdrähte aufweist, **dadurch gekennzeichnet, dass** der Leiter (9) einen oder mehrere Drähte der gleichen Art wie die Verstärkungsdrähte aufweist.

18. Luftreifen nach einem der Ansprüche 15 bis 17, **dadurch gekennzeichnet, dass** der Leiter (9) einen oder mehrere Drähte aus an der Oberfläche vermessingtem Stahl aufweist.

19. Luftreifen nach einem der Ansprüche 15 bis 18, **dadurch gekennzeichnet, dass** der Leiter (9) gewellt ist.

20. Luftreifen nach einem der Ansprüche 15 bis 19, soweit sie von Anspruch 6 abhängen, **dadurch gekennzeichnet, dass** der Leiter (9) an mindestens eine der Folien (13) des Komplexes (14) geklebt ist.

21. Luftreifen nach einem der Ansprüche 1 bis 20, **dadurch gekennzeichnet, dass** er mit dem Gegenstand (10) ausgestattet ist.

22. Luftreifen nach einem der Ansprüche 1 bis 21, **dadurch gekennzeichnet, dass** er mit einer elektronischen Schaltung (70) ausgestattet ist, die mit dem Gegenstand (10) zusammenwirkt.

23. Luftreifen nach Anspruch 22, **dadurch gekennzeichnet, dass** die elektronische Schaltung eine einzige Gleichrichterschaltung (60) aufweist, wobei mindestens ein Ende der schleifenförmigen Teile (2.1, 2.2) mit dem Eingang der Gleichrichterschaltung (60) verbunden ist, wobei der Gegenstand (10) mit dem Ausgang der Gleichrichterschaltung (60) verbunden ist.

24. Luftreifen nach Anspruch 22, **dadurch gekennzeichnet, dass** die elektronische Schaltung mehrere Gleichrichterschaltungen (60.1, 60.2) aufweist, wobei mindestens ein Ende jedes schleifenförmigen Teils mit dem Eingang einer Gleichrichterschaltung (60.1, 60.2) verbunden hat, wobei die Ausgänge der Gleichrichterschaltungen in Reihe mit dem Gegenstand (10) verbunden sind.

25. Luftreifen nach einem der Ansprüche 21 bis 24, der eine Scheitelzone (28) aufweist, **dadurch gekennzeichnet, dass** der Gegenstand (10) und/oder die elektronische Schaltung (70) in der Scheitelzone (28) lokalisiert ist/sind.

26. Luftreifen nach einem der Ansprüche 21 bis 25, der eine Flanke (27) aufweist, **dadurch gekennzeichnet, dass** der Gegenstand (10) und/oder die elektronische Schaltung (70) in der Flanke (27) lokalisiert ist/sind.

27. Luftreifen nach einem der Ansprüche 21 bis 26, der ein Innenvolumen (22) begrenzt, **dadurch gekennzeichnet, dass** der Gegenstand (10) und/oder die elektronische Schaltung (70) im Innenvolumen (22) lokalisiert ist/sind.

28. Luftreifen nach einem der Ansprüche 21 bis 27, soweit sie von Anspruch 6 abhängen, **dadurch gekennzeichnet, dass** der Gegenstand und/oder die elektronische Schaltung in dem Komplex (14) lokalisiert ist/sind.

29. Luftreifen nach einem der Ansprüche 1 bis 28, **dadurch gekennzeichnet, dass** der Gegenstand (10) mindestens ein Element der Gruppe aufweist, die von einem Sensor, einem Zähler, einem elektronischen Etikett gebildet wird.

30. Verfahren zur Herstellung eines Luftreifens, das die folgenden Schritte aufweist:
- Vorbereitung einer Karkasse (11),
- Vorbereitung eines Komplexes (14), der eine Empfangsantenne (2) aufweist, die in mehrere schleifenförmige Teile (2.1, 2.2) aufgeteilt ist, die in einem parallelen Aufbau angeordnet sind, wobei diese Empfangsantenne zwischen zwei Folien (13) eines elektrisch isolierenden Werkstoffs festgehalten wird, vorzugsweise aus einem nicht vulkanisierten Elastomermaterial, das mit den üblichen Werkstoffen des Luftreifens kompatibel ist, indem eine Verbindung (21) mit mindestens einem Gegenstand (10) vorgesehen wird, der dazu bestimmt ist, durch elektromagnetische Kopplung zwischen der Empfangsantenne (2) und mindestens einer Sendeantenne (8) fernkontrolliert zu werden,
- Aufbringen des Komplexes (14) auf die Karkasse (11),
- Bedecken des Komplexes (14) mit einem angereicherten Elastomermaterial und Endbearbeitung, um einen rohen Luftreifen zu erhalten,
- Formen und Vulkanisieren des rohen Luftreifens.

31. Verfahren nach Anspruch 30, **dadurch gekennzeichnet, dass** das angereicherte Elastomermaterial eine Lauffläche (16) des Luftreifens bildet.

32. Verfahren nach einem der Ansprüche 30 oder 31, **dadurch gekennzeichnet, dass** das angereicherte Elastomermaterial dazu beiträgt, eine Flanke (27) des Luftreifens zu bilden.

33. Verfahren nach einem der Ansprüche 30 bis 32, **dadurch gekennzeichnet, dass** es einen Schritt des Aufbringens mindestens einer Scheitelbewehrung (15) auf die Karkasse (11) vor dem Aufbringen des Komplexes (14) aufweist.

34. Verfahren nach einem der Ansprüche 30 bis 33, **dadurch gekennzeichnet, dass** es einen Schritt des Bohrens eines Lochs (24) in die Karkasse (11) aufweist, das in ein vom Luftreifen begrenztes Innenvolumen (22) mündet, wobei dieses Loch (24) dazu bestimmt ist, Verbindungsleiter (21) für die Verbindung zwischen der Empfangsantenne (2) und dem Gegenstand (10) zu enthalten, wobei der Gegenstand sich in dem Innenvolumen (22) befindet.

35. Verfahren nach Anspruch 34, **dadurch gekennzeichnet, dass** auf den Schritt des Bohrens ein Schritt des Wiederverschließens vor dem Vulkanisieren des die Leiter (21) enthaltenden gebohrten Lochs (24) ausgehend von der Innenseite des Luftreifens folgt.

36. Verfahren nach einem der Ansprüche 30 bis 35, **dadurch gekennzeichnet, dass** der Schritt der Vorbereitung des Komplexes (14) die Herstellung mindestens einer Verlängerung (25) aufweist, in der Verbindungsleiter (21) für die Verbindung zwischen der Empfangsantenne (2) und dem Gegenstand (10) festgehalten werden, wobei diese Verlängerung (25) auf eine Flanke (27) des Luftreifens umgeschlagen wird, wenn der Komplex (14) auf eine Scheitelzone (28) des Luftreifens aufgebracht wird, oder auf die Scheitelzone (28) umgeschlagen wird, wenn der Komplex (14) auf die Flanke (27) aufgebracht wird.
